# EUROPEAN PATENT SPECIFICATION

(11) **EP 4 261 404 B1**
(45) Date of publication and mention of the grant of the patent: **09.04.2025**
(21) Application number: 22382350.1
(22) Date of filing: 12.04.2022
(51) Int. Cl.: F03D 1/00, F03D 80/00

(54) **WIND TURBINE FRAME WITH FLEXIBLE COUPLING**
WINDTURBINENRAHMEN MIT FLEXIBLER KUPPLUNG
CADRE DE TURBINE ÉOLIENNE À COUPLAGE SOUPLE

(43) Date of publication of application: 18.10.2023
(73) Proprietor: General Electric Renovables España S.L., 08005 Barcelona (ES)
(72) Inventor: ECHARTE CASQUERO, Francisco Javier, 08005 Barcelona (ES); DIGARD BROU DE CUISSART, Sébastien, 44200 Nantes (FR); OLESEN, John T., 8370 Hadsten (DK)
(74) Representative: Bardehle Pagenberg S.L.

(56) References cited:
- EP-A1- 2 899 394
- EP-A1- 3 453 867
- EP-A1- 4 012 173
- WO-A2-2010/069315
- DE-A1- 102008 046 210
- US-A1- 2010 314 884

## Description

### FIELD

The present disclosure relates to wind turbines comprising a flexible coupling. More specifically, the present disclosure relates to wind turbines comprising flexible couplings between a primary frame and a secondary structure. EP 2 899 394 A1 discloses an example of a wind turbine with a secondary structure flexibly connected to a primary frame. The present disclosure also relates to secondary structures and methods for refurbishing a secondary structure of a wind turbine.

### BACKGROUND

Modern wind turbines are commonly used to supply electricity into the electrical grid. Wind turbines of this kind generally comprise a tower, a nacelle and a rotor. The rotor, which typically comprises a hub and a plurality of blades, is set into rotation under the influence of the wind on the blades. This rotation is normally transmitted to a generator, either directly ("directly driven") or through the use of a gearbox. This way, the generator produces electricity which can be supplied to the electrical grid.

In order to extract more energy from the wind, the size of the rotor diameter has increased significantly over the last years by increasing the dimensions of the wind turbine blades. The larger size of the blades implies higher aerodynamic loads that are transferred through the blades into the rotor, nacelle and tower. For example, larger rotor blades may experience increased stresses, deformations and vibrations due to higher aerodynamical moments and others, and these are transmitted to the rotor hub and to the nacelle. The transmitted stresses, deformations and vibrations may lead to challenging design constraints, both in terms of extreme events and fatigue life requirements.

The likelihood of structural failure in wind turbine components, such as a frames of the wind turbine nacelle, is generally compensated by the manufacture of bigger, heavier and more resistant components. In the case of the nacelle frames, this approach leads to an increase in material costs, and a considerable increase in the overall weight of the nacelle. Further, the installation of bigger frames may require providing more robust tower structures so that the tower can safely withstand the nacelle and the loads acting on it. Even if bigger and heavier frames are used, they can still suffer and ultimately fail due to dynamic loads.

The present disclosure provides examples of systems and methods that avoid or reduce premature failure of frames of the wind turbine nacelle and that overcome some of the drawbacks of existing approaches.

### SUMMARY

In a first aspect, a wind turbine is provided. The wind turbine comprises a wind turbine tower, and a nacelle including a primary frame, wherein the primary frame is connected to the tower. The wind turbine further comprises a secondary structure that is connected to the primary frame and one or more flexible couplings between the primary frame and the secondary structure configured to reduce transmission of deformations from the primary frame to the secondary structure.

According to this first aspect, the one or more flexible couplings installed between the primary frame and the secondary structure of the wind turbine reduce the magnitude of the deformations transferred from the primary frame to the secondary structure, thus reducing the level of stress induced into the secondary structure. The primary frame may suffer asymmetric deformations due to asymmetric loads on the wind turbine rotor. These asymmetric deformations of the primary frame, if transferred to the secondary structure, could lead to significant stresses and strains in the secondary structure. The flexible couplings can avoid or significantly reduce those stresses. Thus, the secondary structure may be manufactured taking into account a narrower load envelope compared with a scenario where the flexible coupling is not provided. As a result, the secondary structure may be manufactured as a lighter frame and may have a simpler structure.

In another aspect, a method of refurbishing a secondary structure of a wind turbine, that is connected to a primary frame is provided. The method comprises cutting a piece of a structural element of the secondary structure that is connected to the primary frame and providing a flexible coupling in a portion of the structural element in replacement of the cut piece. The method then further comprises coupling the secondary structure to the primary frame through the flexible coupling, wherein the flexible coupling is configured to reduce transmission of deformations of the primary frame to the secondary structure.

The method according to this aspect allows refurbishing a secondary structure of a wind turbine in wind turbines that are already in operation. Particularly, the method allows considerably increasing the service life of nacelle frame assemblies.

In yet a further aspect, a secondary structure of a wind turbine is provided. The secondary structure comprises a plurality of structural elements configured to be connected to a primary frame of the wind turbine. At least one of the structural elements comprises a flexible coupling configured to reduce the transmission of horizontal deformations of the primary frame to the secondary frame. And at least another one of the structural elements comprises a flexible coupling configured to reduce the transmission of both horizontal and vertical deformations of the primary frame to the secondary structure.

And in yet a further aspect, a method for reducing oscillations in a secondary structure is provided. The secondary structure is connected to a primary frame of a wind turbine. The method comprises providing one or more flexible couplings between the primary frame and the secondary structure, such that deformations of the primary frame are partially absorbed by the flexible couplings, and at least some of the oscillations of the primary frame are not transmitted to the secondary structure.

Throughout the present disclosure, a primary frame is to be regarded as a load carrying structure arranged in the main load path between the wind turbine rotor and wind turbine tower. I.e. the primary frame is the load carrying structure that transmits the loads to the tower, generally through a yaw bearing. A primary frame may also be called a central frame or a main frame.

A secondary structure as used throughout the present disclosure may be regarded as a (load-carrying) structure that is not arranged in the main load path. The secondary structure may be used for accommodating or housing auxiliary systems such as auxiliary mechanical or electrical systems, and in particular the power conversion assembly or components thereof.

Throughout the present disclosure, a vertical direction should be understood as a direction substantially parallel to the direction of gravity, and a horizontal direction should be understood as a direction substantially parallel to ground and perpendicular to the vertical direction.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 illustrates a detailed, internal view of a nacelle of a wind turbine according to one example;
Figure 3 schematically illustrates an exploded view of a central frame and secondary structure according to another example;
Figure 4 schematically illustrates a perspective view of a secondary structure according to another example;
Figure 5 is a detailed view of a flexible coupling between a central frame and a secondary structure according to one example;
Figure 6 is a perspective view of a flexible coupling standing alone according to one example; and
Figure 7 is a block diagram of a method for refurbishing a wind turbine according to one example.

### DETAILED DESCRIPTION OF EXAMPLES

Reference now will be made in detail to embodiments of the present disclosure, one or more examples of which are illustrated in the drawings.

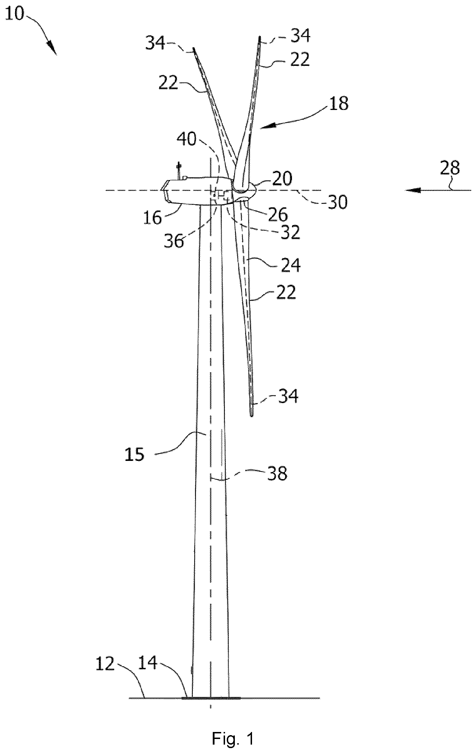

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

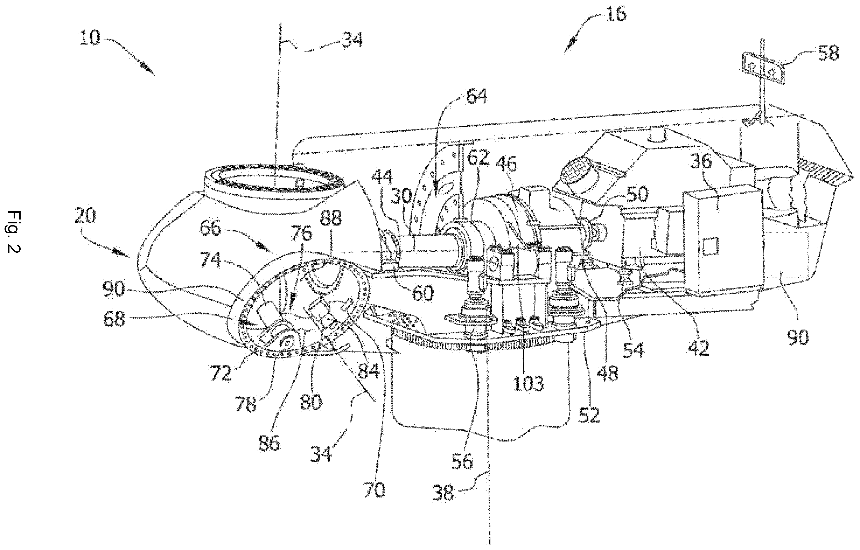

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (10 - 35 KV). Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 also may include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34.

Pitch drive system 68 is coupled to the wind turbine controller 36 for adjusting the pitch angle of a rotor blade 22 upon receipt of one or more signals from the wind turbine controller 36. The pitch assembly 66 may also include one or more pitch control systems 80 for controlling the pitch drive system 68 according to control signals from the wind turbine controller 36, in case of specific prioritized situations and/or during rotor 18 overspeed.

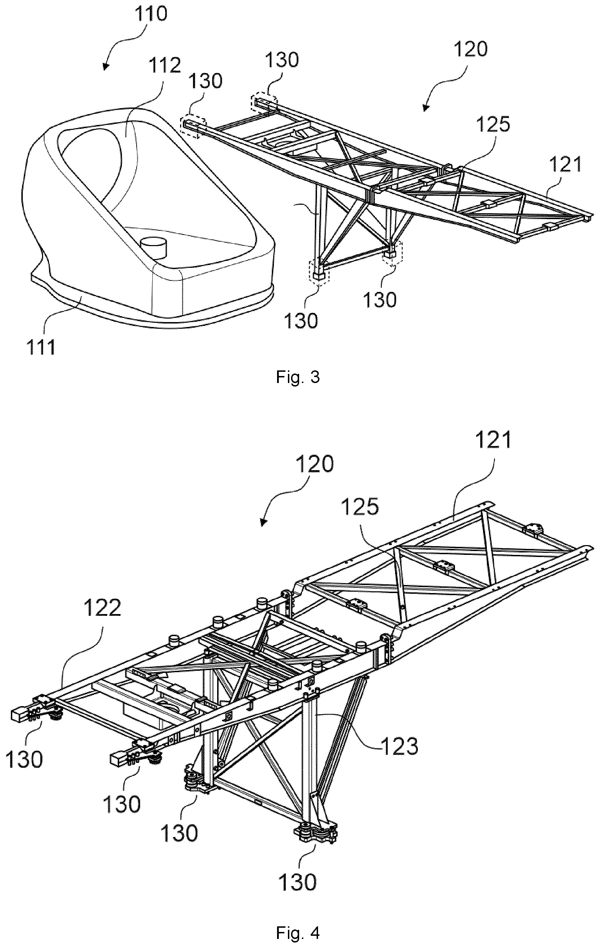

Figure 3 schematically illustrates an exploded view of a primary frame and a secondary structure of a wind turbine provided. The wind turbine comprises a wind turbine tower (not shown) and a primary frame 110 connected to the tower. The wind turbine further comprises a secondary structure 120 that is connected to the primary frame 110 and one or more flexible couplings 130 between the primary frame 110 and the secondary structure 120 configured to reduce transmission of deformations from the primary frame to the secondary structure.

The wind turbine comprises a rotor including a plurality of blades (not shown). In this example, the rotor is located at a first side of the primary frame 110. The secondary structure 120 is connected to the primary frame 110 at a second side of the primary frame 110. The first side is opposite to the second side.

The first side of the primary frame 110 at which the rotor is arranged may typically be an upwind side of the primary frame 110. The second side of the primary frame 110 may thus be the downwind side. In other examples, the first side of the primary frame 110 may be the downwind side, and the second side of the primary frame 110 may be the upwind side.

The wind turbine comprises one or more flexible couplings 130 between the primary frame 110 and the secondary structure 120. The flexible couplings 130 are configured to reduce transmission of deformations from the primary frame 110 to the secondary structure 120. Note that the flexible couplings 130 in figure 1 have been schematically illustrated as a rectangular box of broken lines for simplicity. Figures 4 to 6 and the discussion below will provide more details regarding examples of the flexible couplings 130 that may be used.

The flexible couplings 130 may be or comprise any element that reduces the level of loads and stresses induced from the primary frame 110 to the secondary structure 120 while it withstands the loads acting on the secondary structure 120. Thus, the flexible couplings may provide a secure connection between secondary structure 120 and primary frame 110.

In examples, the flexible couplings 130 may comprise an elastomeric material or a material substantially more flexible than the material from which the secondary structure 120 is manufactured. Additionally, the flexible couplings 130 may comprise a metal spring or a grower washer to allow certain degree of motion between the secondary structure 120 and the central frame 110. According to the invention, the flexible couplings 130 comprise a sliding mechanism that allows relative displacement between the central frame 110 and the secondary structure 120.

In some examples, such as in figure 3, the primary frame 110 may comprise a base structure 111 including a substantially horizontal plane configured for connecting to a yaw bearing of the tower. Further, the primary frame may also comprise a front structure 112 including a substantially vertical plane configured for connecting to a rotor support structure. Additionally, the secondary structure 120 may be connected to the primary frame 110 at, or near, the base structure 111 and at, or near, the front structure 112.

In further examples, the rotor support structure connected to the vertical plane of the primary frame may be a front frame or an intermediate frame. Depending on the arrangement of the wind turbine components, the rotor support structure may also be a stator structure of a generator stator.

In some examples, the wind turbine may be a direct drive wind turbine. In other examples, the wind turbine according to this example may be a wind turbine with a gearbox.

As can be seen in figure 3, the secondary structure 120 may comprise a helipad region 121 configured to support all necessary parts and components to form a helipad. A helipad region 121 of a nacelle of a wind turbine is generally a platform on top the nacelle that may be used for supplying and removing parts of components of the wind turbine, and also an area from which personnel may be evacuated. It will be clear that a nacelle housing can encompass the frames 110, 120 or part of the frames. The secondary structure 120 may additionally comprise other structural components intended to receive other nacelle components.

Figure 4 schematically illustrates a secondary structure 120 of a wind turbine according to one example. The secondary structure 120 comprises a plurality of structural elements 122, 123 configured to be connected to the primary frame of the wind turbine (not shown in this figure).

At least one of the structural elements 122, e.g. substantially horizontal beams comprises a flexible coupling 130 specifically configured to reduce the transmission of horizontal deformations induced on the primary frame. The flexible coupling 130 may have specific flexibility in the horizontal direction to achieve such an effect, i.e. the flexible coupling between primary frame 110 and horizontal beams 122 may have more flexibility in the horizontal direction than in the vertical direction.

Further, at least another one of the structural elements 123, e.g. vertical struts comprises a flexible coupling 130 specifically configured to reduce the transmission of both horizontal and vertical deformations of the central frame 110 to the secondary structure 120.

Also illustrated in figure 4, the secondary structure 120 may include a trusswork structure 125. The trusswork structure 125 may be designed and manufactured in a variety of ways. In some examples, the trusswork structure 125 may comprise trusses between external beams arranged equidistantly from adjacent trusses. The trusses may be metal profiles or metal beams. In other examples, the trusses may be composite or hybrid profiles or beams. The trusses may be connected to beams (both external and internal beams) and/or to each other by any fastening element known in the art, i.e. rivets, spot welding, line welding, and others.

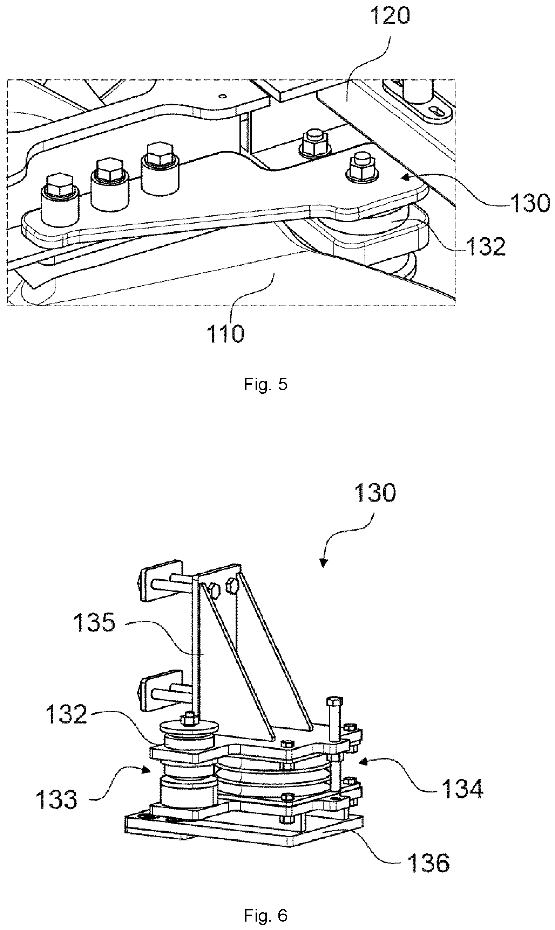

In the example illustrated in figure 4, at least one of the flexible couplings 130 may comprise a silentblock. Examples of silentblocks will be discussed in more detail in relation with figures 5 and 6.

In some examples, at least one of the flexible couplings 130 is configured to reduce the transmission of deformations and vibrations specifically in a single direction. In some further examples, at least one of the flexible couplings 130 is configured to reduce the transmission of deformations and vibrations in at least two directions.

Additionally, the flexible couplings 130 substantially reduce the vibrations transmitted from the central frame 110 to the secondary structure 120 in a frequency range that has a significant influence in the level of stress/damage induced into the secondary frame. Specifically, the frequency range may be between 1Hz and 50Hz.

Figure 5 illustrates a detailed view of a flexible coupling 130 between a central frame 110 and a secondary structure 120. In the above case, the flexible coupling 130 comprises a first end coupled to a central frame 110, an intermediate portion including an elastomer material 132 and a second end coupled to a secondary structure 120. Thus, deformations in the central frame 110 may be at least partially absorbed by the elastomer material 132 and the stresses transmitted to the secondary structure 120 may be substantially reduced. As previously discussed, other type of flexible couplings 130 may be employed for the same purpose, i.e. silentblocks, springs, grower washers, sliding connections and others.

Silentblocks may be formed by an annular cylinder of flexible material inside a considerably rigid casing, i.e. a metallic casing. The flexible material may be connected between two ends of the casing, providing a flexible coupling between the respective ends. In some examples, the silentblocks may comprise an internal crush tube configured to protect the silentblocks from being crushed by the fastener connections that hold it in place. According to the invention, the silentblocks allow sliding at the interface between one fastener connectior and the flexible material.

The flexible coupling 130 illustrated in figure 5 is coupled to a horizontal structural element (with reference numeral 122 in figure 4) and has an increased flexibility in a horizontal plane (as compared to e.g. the vertical direction). More relative displacement is allowed in the horizontal plane. Thus, lower stresses are induced into the secondary structure, specifically along the horizontal plane.

Figure 6 illustrates a perspective view of a flexible coupling 130 standing alone. More precisely, the flexible coupling 130 in figure 6 corresponds to the example of the flexible component coupled to the vertical strut 123 in figure 4. The flexible coupling 130 in figure 6 comprises a first end 135 configured to be connected to a structural element of the secondary structure 120 and a second end 136 configured to be connected to a structural element of the central frame 110. More precisely, the first end 135 may be connected to a substantially vertical structural element 123 of the secondary structure 120, whereas the second end 136 may be connected at, or near, the base structure 111 of the central frame 110 (see figure 3 and 4).

Figure 6 also shows that the flexible coupling 130 may comprise more than one device configured for damping vibrations and mitigate the transmission of associated stresses. More specifically, the flexible coupling 130 may comprise two damping devices 133, 134, i.e. two silentblocks. The devices 133, 134 may be connected in parallel wherein e.g. a first device 133 allows the relative displacement in two directions, i.e. horizontally and vertically, and a second device 134 supports the weight of the secondary structure and allows the displacement in a second direction, i.e. vertical direction. The damping characteristics of each of the devices 133, 134 may be chosen such as to damp deformation or vibrations of different amplitudes and frequencies. Further, the devices 133, 134 may be also configured to withstand different maximum loads acting on them. For example, the second device 134 may be configured to withstand higher loads than the first device 133, and *vice versa.* Other arrangement of devices may be chosen to mitigate stresses and vibrations of certain amplitudes, frequencies and direction of propagation.

In further examples, two or more of such damping devices may be arranged in series, i.e. a load path inevitable passes through both of the damping devices. In a parallel arrangement, parallel load paths between the primary frame and secondary structure may be provided.

In some additional examples, the secondary structure 120 may comprise flexible couplings 130 in all structural elements that are coupled to the central frame 110. Alternatively, the secondary structure 120 may comprise flexible couplings 130 in some of the structural elements that are coupled to the central frame 110. In this case, other types of connections between the central frame 110 and the secondary structure 120 may be employed, i.e. partially rotatable connections.

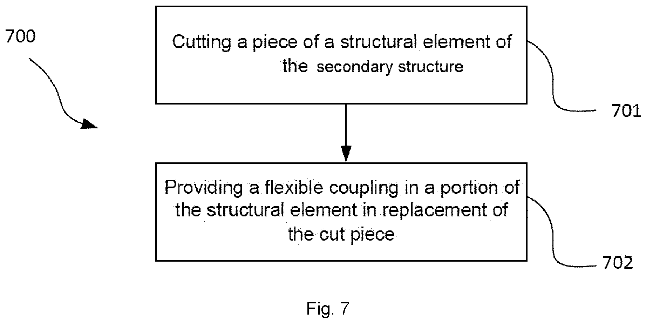

Figure 7 is a flow diagram of an example of a method 700 for refurbishing a secondary structure 120 of a wind turbine 10 according to the present disclosure. The method 700 comprises, at block 701, cutting a piece of a structural element 123, 122 of the secondary structure 120 that is be connected to a primary frame 110. Further, the method 700 also comprises, at block 702, providing a flexible coupling 130 in a portion of the structural element 123, 122 in replacement of the cut piece.

The method 700 may further comprise coupling the secondary structure 120 to the primary frame 110 through the flexible coupling 130. The flexible coupling, as in other examples of the present disclosure is, according to the invention, specifically configured to limit the transmission of deformations from the primary frame 110 to the secondary structure.

Further, the method 700 may also comprise supporting the structural element 123, 122 since before the cutting 701 until the moment of coupling to the primary frame, or even until after.

In some examples, supporting the structural element 123, 122 may be performed using one or more jacks, e.g. hydraulic jacks or any other suitable system. Additionally, the steps of cutting 701 a piece of a structural element 123, 122 and providing 702 a flexible coupling 130 may be performed in all structural elements configured to be connected to the central frame 110. In such a case, a flexible coupling is provided at each of connection of the primary frame to the secondary structure.

Note that some of the technical features described in relation with the wind turbine, the secondary structure and the flexible couplings of the examples of figures 3 - 6 may be included in the method 700 for refurbishing a wind turbine, and *vice versa.*

With the method of refurbishing, at the same time, a method for reducing oscillations in the secondary structure is provided. The secondary structure is connected to a primary frame of a wind turbine. By providing one or more flexible couplings between the primary frame and the secondary structure, deformations of the primary frame are partially absorbed by the flexible couplings, and at least some of the oscillations of the primary frame are not transmitted to the secondary structure.

Examples of such a method for reducing oscillations in the secondary structure may use any of the features of the various examples of figures 3 - 6 either in isolation or in combination.

## Claims

1. A wind turbine (10) comprising:
a wind turbine tower (15);
a nacelle including a primary frame (110), the primary frame being connected to the tower (15);
a secondary structure (120) connected to the primary frame (110); and
one or more flexible couplings (130) between the primary frame (110) and the secondary structure (120) configured to reduce transmission of deformations from the primary frame (110) to the secondary structure (120), **characterized in that**
at least one of the flexible couplings (130) comprises a sliding mechanism that allows relative displacement between the primary frame (110) and the secondary structure (120).

2. The wind turbine of claim 1, further comprising a rotor (18) having a plurality of blades (22) at a first side of the primary frame (110) and wherein the secondary structure (120) is arranged at a second side of the primary frame, the second side being opposite to the first side.

3. The wind turbine (10) of claim 1 or 2, wherein the primary frame (110) comprises a base structure (111) including a substantially horizontal plane configured for connecting to a yaw bearing of the wind turbine tower, and a front structure (112) including a substantially vertical plane configured for connecting to a rotor support structure, and wherein the secondary structure (120) is connected to the primary frame (110) at or near the base structure (111) and at or near the front structure (112).

4. The wind turbine (10) of claim 3, wherein the rotor support structure is a front frame or an intermediate frame.

5. The wind turbine (10) of claim 3, wherein the rotor support structure is a stator structure of a generator.

6. The wind turbine (10) of any of claims 1 - 5, wherein the secondary structure (120) is configured to accommodate power conversion components, and/or other electrical or mechanical auxiliary systems.

7. The wind turbine (10) of any of claims 1 - 6, wherein the secondary structure (120) is configured to support a helipad (121).

8. The wind turbine (10) of any of claims 1 - 7, wherein the secondary structure (120) includes a trusswork structure (125).

9. The wind turbine (10) according to any of claims 1 - 8, wherein at least one of the flexible couplings (130) between the primary frame (110) and the secondary structure (120) comprises an elastomeric material.

10. The wind turbine (10) according to claim 9, wherein at least one of the flexible couplings (130) comprises a silentblock (132, 133).

11. The wind turbine (10) according to any of claims 1 - 10, wherein at least one of the flexible couplings (130) reduces the transmission of deformations in at least two directions.

12. A method (700) for refurbishing a secondary structure (120) of a wind turbine (10), that is connected to a primary frame (110) of the wind turbine (10), the method (700) comprising:
cutting (701) a piece of a structural element (123, 124) of the secondary structure (120) that is connected to the primary frame (110); and
providing (702) a flexible coupling (130) in a portion of the structural element (123, 124) in replacement of the cut piece; and
coupling the secondary structure (120) to the primary frame (110) through the flexible coupling (130), wherein
the flexible coupling is configured to reduce transmission of deformations of the primary frame (110) to the secondary structure (120), and specifically **characterized in that**
the flexible coupling comprises a sliding mechanism that allows relative displacement between the primary frame (110) and the secondary structure (120).

13. The method (700) according to claim 12, wherein the method (700) comprises providing a flexible coupling at each point of connection of the primary frame (110) to the secondary structure (120).

14. The method (700) according to claim 12 or 13, wherein the method (700) further comprises supporting the structural element (123, 124) from before the cutting (701) until the coupling.

## Patentansprüche

1. Eine Windturbine (10) umfasst:
einen Turm einer Windkraftanlage (15);
eine Gondel mit einem Primärrahmen (110), wobei der Primärrahmen mit dem Turm (15) verbunden ist;
eine Sekundärstruktur (120), die mit dem Primärrahmen (110) verbunden ist; und
eine oder mehrere flexible Kupplungen (130) zwischen dem Primärrahmen (110) und der Sekundärstruktur (120), die so konfiguriert sind, dass sie die Übertragung von Verformungen vom Primärrahmen (110) auf die Sekundärstruktur (120) reduzieren, **dadurch gekennzeichnet**
mindestens eine der elastischen Kupplungen (130) einen Gleitmechanismus umfasst, der eine relative Verschiebung zwischen dem Primärrahmen (110) und der Sekundärstruktur (120) ermöglicht.

2. Windturbine nach Anspruch 1, ferner umfassend einen Rotor (18) mit einer Vielzahl von Blättern (22) an einer ersten Seite des Primärrahmens (110), und wobei die Sekundärstruktur (120) an einer zweiten Seite des Primärrahmens angeordnet ist, wobei die zweite Seite der ersten Seite gegenüberliegt.

3. Windturbine (10) nach Anspruch 1 oder 2, wobei der Primärrahmen (110) eine Basisstruktur (111) mit einer im Wesentlichen horizontalen Ebene, die zur Verbindung mit einem Gierlager des Windturbinenturms konfiguriert ist, und eine Frontstruktur (112) mit einer im Wesentlichen vertikalen Ebene, die zur Verbindung mit einer Rotorstützstruktur konfiguriert ist, umfasst, und wobei die Sekundärstruktur (120) mit dem Primärrahmen (110) an oder nahe der Basisstruktur (111) und an oder nahe der Frontstruktur (112) verbunden ist.

4. Windkraftanlage (10) nach Anspruch 3, wobei die Rotortragstruktur ein Vorderrahmen oder ein Zwischenrahmen ist.

5. Die Windturbine (10) nach Anspruch 3, wobei die Rotorstützstruktur eine Statorstruktur eines Generators ist.

6. Die Windturbine (10) nach einem der Ansprüche 1 bis 5, wobei die Sekundärstruktur (120) so konfiguriert ist, dass sie Energieumwandlungskomponenten und/oder andere elektrische oder mechanische Hilfssysteme aufnehmen kann.

7. Die Windturbine (10) nach einem der Ansprüche 1 bis 6, wobei die Sekundärstruktur (120) so konfiguriert ist, dass sie einen Helipad (121) trägt.

8. Die Windturbine (10) nach einem der Ansprüche 1 bis 7, wobei die Sekundärstruktur (120) eine Fachwerkstruktur (125) umfasst.

9. Windturbine (10) nach einem der Ansprüche 1 bis 8, wobei mindestens eine der flexiblen Kupplungen (130) zwischen dem Primärrahmen (110) und der Sekundärstruktur (120) ein elastomeres Material umfasst.

10. Windturbine (10) nach Anspruch 9, wobei mindestens eine der flexiblen Kupplungen (130) einen Silentblock (132, 133) umfasst.

11. Windkraftanlage (10) nach einem der Ansprüche 1 bis 10, wobei mindestens eine der elastischen Kupplungen (130) die Übertragung von Verformungen in mindestens zwei Richtungen reduziert.

12. Verfahren (700) zum Überholen einer Sekundärstruktur (120) einer Windturbine (10), die mit einem Primärrahmen (110) der Windturbine (10) verbunden ist, wobei das Verfahren (700) umfasst:
Schneiden (701) eines Teils eines Strukturelements (123, 124) der Sekundärstruktur (120), das mit dem Primärrahmen (110) verbunden ist; und
Bereitstellen (702) einer flexiblen Kupplung (130) in einem Teil des Strukturelements (123, 124) als Ersatz für das abgeschnittene Stück; und
Koppeln der Sekundärstruktur (120) mit dem Primärrahmen (110) durch die flexible Kupplung (130), wobei
die flexible Kupplung so konfiguriert ist, dass sie die Übertragung von Verformungen des Primärrahmens (110) auf die Sekundärstruktur (120) reduziert, und insbesondere **dadurch gekennzeichnet ist, dass**
die flexible Kupplung umfasst einen Gleitmechanismus, der eine relative Verschiebung zwischen dem Primärrahmen (110) und der Sekundärstruktur (120) ermöglicht.

13. Verfahren (700) nach Anspruch 12, wobei das Verfahren (700) das Bereitstellen einer flexiblen Kupplung an jedem Verbindungspunkt zwischen dem Primärrahmen (110) und der Sekundärstruktur (120) umfasst.

14. Verfahren (700) nach Anspruch 12 oder 13, wobei das Verfahren (700) ferner das Abstützen des Strukturelements (123, 124) von vor dem Schneiden (701) bis zum Ankoppeln umfasst.

## Revendications

1. Une éolienne (10) comprenant :
une tour d'éolienne (15) ;
une nacelle comprenant un cadre primaire (110), le cadre primaire étant relié à la tour (15) ;
une structure secondaire (120) reliée au cadre primaire (110) ; et
un ou plusieurs accouplements flexibles (130) entre le cadre primaire (110) et la structure secondaire (120) configurés pour réduire la transmission des déformations du cadre primaire (110) à la structure secondaire (120) , **caractérisés par le fait que**
au moins l'un des accouplements flexibles (130) comprend un mécanisme coulissant qui permet un déplacement relatif entre le cadre primaire (110) et la structure secondaire (120).

2. L'éolienne de la revendication 1, comprenant en outre un rotor (18) ayant une pluralité de pales (22) sur un premier côté du cadre primaire (110) et dans lequel la structure secondaire (120) est disposée sur un second côté du cadre primaire, le second côté étant opposé au premier.

3. L'éolienne (10) de la revendication 1 ou 2, dans laquelle le cadre primaire (110) comprend une structure de base (111) comprenant un plan sensiblement horizontal configuré pour se connecter à un roulement de lacet de la tour de l'éolienne, et une structure avant (112) comprenant un plan sensiblement vertical configuré pour se connecter à une structure de support du rotor, et dans laquelle la structure secondaire (120) est connectée au cadre primaire (110) au niveau ou à proximité de la structure de base (111) et au niveau ou à proximité de la structure avant (112).

4. L'éolienne (10) de la revendication 3, dans laquelle la structure de support du rotor est un cadre avant ou un cadre intermédiaire.

5. L'éolienne (10) de la revendication 3, dans laquelle la structure de support du rotor est une structure de stator d'un générateur.

6. L'éolienne (10) de l'une des revendications 1 à 5, dans laquelle la structure secondaire (120) est configurée pour accueillir des composants de conversion d'énergie et/ou d'autres systèmes auxiliaires électriques ou mécaniques.

7. L'éolienne (10) de l'une des revendications 1 à 6, dans laquelle la structure secondaire (120) est configurée pour supporter un héliport (121).

8. L'éolienne (10) de l'une des revendications 1 à 7, dans laquelle la structure secondaire (120) comprend une structure en treillis (125).

9. L'éolienne (10) selon l'une des revendications 1 à 8, dans laquelle au moins l'un des accouplements flexibles (130) entre le cadre primaire (110) et la structure secondaire (120) comprend un matériau élastomère.

10. L'éolienne (10) selon la revendication 9, dans laquelle au moins un des accouplements flexibles (130) comprend un silentbloc (132, 133).

11. L'éolienne (10) selon l'une des revendications 1 à 10, dans laquelle au moins un des accouplements flexibles (130) réduit la transmission des déformations dans au moins deux directions.

12. Procédé (700) de remise à neuf d'une structure secondaire (120) d'une éolienne (10), qui est reliée à un cadre primaire (110) de l'éolienne (10), le procédé (700) comprenant :
couper (701) une pièce d'un élément structurel (123, 124) de la structure secondaire (120) qui est reliée au cadre primaire (110) ; et
fournir (702) un accouplement flexible (130) dans une partie de l'élément structurel (123, 124) en remplacement de la pièce coupée ; et
coupler la structure secondaire (120) au cadre primaire (110) par l'intermédiaire de l'accouplement flexible (130), dans lequel
l'accouplement flexible est configuré pour réduire la transmission des déformations du cadre primaire (110) à la structure secondaire (120), et est spécifiquement **caractérisé en ce que**
l'accouplement flexible comprend un mécanisme coulissant qui permet un déplacement relatif entre le cadre primaire (110) et la structure secondaire (120).

13. Méthode (700) selon la revendication 12, dans laquelle la méthode (700) comprend la fourniture d'un accouplement flexible à chaque point de connexion du cadre primaire (110) à la structure secondaire (120).

14. Méthode (700) selon la revendication 12 ou 13, dans laquelle la méthode (700) comprend en outre le soutien de l'élément structurel (123, 124) avant la découpe (701) jusqu'à coupler.
